# EUROPEAN PATENT APPLICATION

(11) **EP 2 246 921 A2**
(43) Date of publication of application: **03.11.2010**
(21) Application number: 10006555.6
(22) Date of filing: 26.04.2006
(51) Int. Cl.: H01M 2/26, B23K 26/32

(54) **Lithium battery manufacturing method**

(30) Priority: 19.05.2005 US 133106
(62) Divisional of application: 06751631.0
(71) Applicant: MEDTRONIC, INC., Minneapolis, MN 55432 (US)
(72) Inventor: Zhao, Hailiang, Maple Grove Minnesota 55311 (US)
(74) Representative: Bridge, Kerry Ann

(57) **Abstract**

A method of producing a lithium battery includes laser welding at least one current collector (230) to an electrode (220). A refractory material may be provided adjacent the electrode (220) before the laser welding step.

## Description

### BACKGROUND

The present invention relates generally to the field of lithium batteries (e.g., lithium-ion batteries, lithium polymer batteries, etc.) and to methods of manufacturing such batteries.

Lithium batteries (e.g., lithium-ion batteries) include a positive electrode comprising a thin metal foil (e.g., aluminum such as an aluminum foil) and a negative electrode comprising a thin metal foil (e.g., copper such as a copper foil). An active material is applied to the electrodes to facilitate the movement of ions between the electrodes. For example, the positive electrode may include LiCoO₂ or another active material provided thereon, while the negative electrode may also include a carbonaceous active material such as graphite provided thereon.

The positive electrode and the negative electrode include a member or element such as a tab that acts as a current collector for the electrode (referred to herein as a current collector). Such current collectors are conventionally coupled to the electrodes by ultrasonic welding or mechanical riveting.

The use of ultrasonic welding processes may present a number of difficulties. One such difficulty is that such processes may require specially designed welding system components that may not be conveniently shared by different models of products. Another difficulty is that the processes may require careful alignment of weld tooling to obtain acceptable welds. Yet another difficulty is that such processes may generate metal particles that can potentially short the cells. Still another difficulty is that in some instances, the weld process may cause delamination of the electrode coating due to the ultrasonic vibration.

Mechanical riveting processes may also present difficulties. For example, the use of such processes may result in shorting of the battery due to the presence of metal particles that may be generated by the process.

It would be desirable to provide an improved method for producing lithium batteries, for example, that overcomes the difficulties described above and that may provide one or more additional advantages as may be apparent to those of skill in the art reviewing this disclosure.

### SUMMARY

The invention provides a method of producing a lithium battery comprising:
laser welding two current collectors concurrently to an electrode, the electrode provided between the two current collectors.

In an exemplary embodiment, the method comprises coupling at least one current collection tab to an electrode using a laser; and providing a cell element comprising the electrode in a battery container.

Preferred embodiments will now be described by way of example only, with reference to the drawings.

### BRIEF DESCRIPTION OF THE DRAWINGS

FIGURE 1 is a perspective cutaway view of a lithium battery made according to an exemplary embodiment.

FIGURE 2 is an exploded perspective view of the lithium battery shown in FIGURE 1.

FIGURE 3 is a flow diagram describing steps in a method of producing an electrode and current collector assembly according to an exemplary embodiment.

FIGURE 4 is a schematic perspective view of an electrode and current collector assembly showing the attachment of a current collector to an electrode according to an exemplary embodiment.

FIGURE 5 is a flow diagram describing steps in a method of producing an electrode and current collector assembly according to an exemplary embodiment.

FIGURE 6 is a schematic perspective view of an electrode and current collector assembly showing the attachment of two current collectors to an electrode according to an exemplary embodiment.

FIGURE 7 is a schematic perspective view of an electrode and current collector assembly showing the attachment of a current collector to an electrode according to an exemplary embodiment.

FIGURE 8 is a schematic perspective view of an electrode and current collector assembly showing the attachment of a current collector to an electrode according to an exemplary embodiment.

### DETAILED DESCRIPTION OF EXEMPLARY EMBODIMENTS

According to an exemplary embodiment, a method for producing a lithium battery (e.g., a lithium-ion battery, a lithium polymer battery, etc.) includes coupling two current collectors or tabs to an electrode by laser welding or laser riveting. It should be noted by those reviewing this disclosure that the teachings disclosed herein may be used with any of a variety of lithium battery types and configurations, and should not be restricted to the particular exemplary embodiments shown and/or described herein.

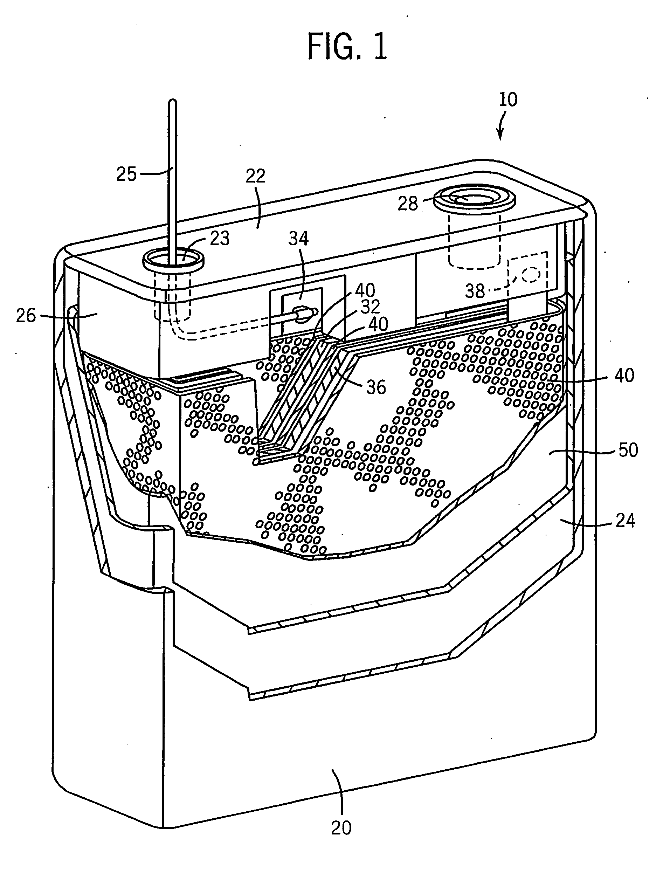

With reference to FIGURE 1, a perspective cutaway view of a lithium battery 10 is shown according to an exemplary embodiment. The lithium battery 10 includes a battery case or housing 20 that may be made of stainless steel or another metal such as titanium, aluminum, or alloys thereof. According to another exemplary embodiment, the battery case may be made of a plastic material or a plastic-foil laminate material (e.g., an aluminum foil provided intermediate a polyolefin layer and a polyester layer).

According to an exemplary embodiment, a liner 24 may be provided adjacent or proximate to the case 20 to separate internal components of the lithium battery 10 from the case 20. According to an exemplary embodiment, the liner 24 may be made of ethylene tetrafluoroethylene (ETFE) and may have a thickness of between approximately 0.001 and 0.003 inches (0.0254 - 0.0762 mm).

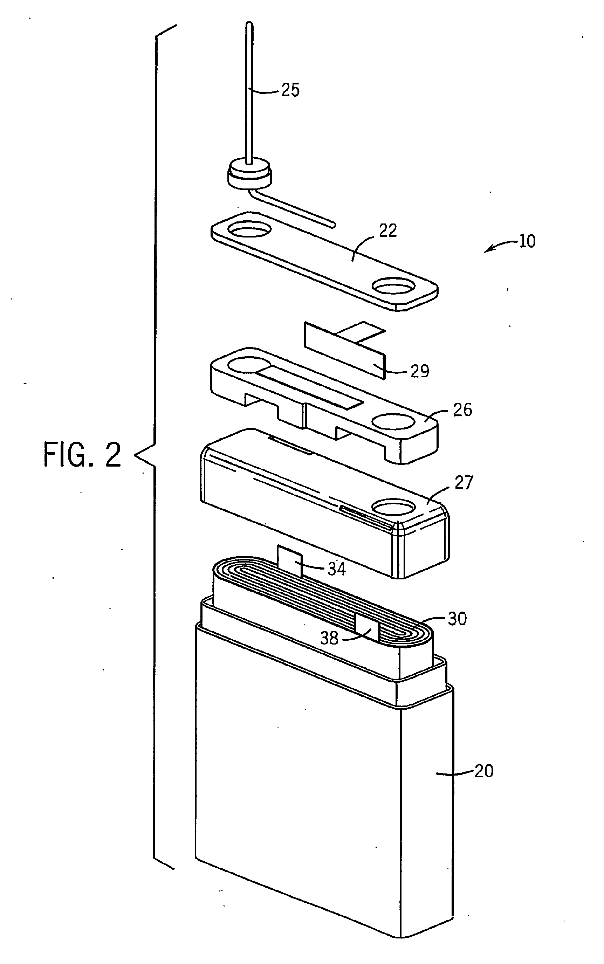

A cover or cap 22 is provided at a top surface of the battery 10 and may be coupled (e.g., welded, adhered, etc.) to the case 20. A headspace insulator 26 is provided within the case 20 to provide a space in which connections may be made to electrodes provided within the case 20 (additionally, a coil liner 27 as shown in FIGURE 2 may be provided which may act to separate a cell element from the headspace region of the battery 10). A member or element 29 in the form of a bracket may be provided to couple a current collector of a negative electrode to the case and/or to the housing.

The battery 10 includes a cell element 30 (FIGURE 2) provided within the case 20 that comprises at least one positive electrode 32 and at least one negative electrode 36. The electrodes may be provided as flat or planar components of the battery 10, may be wound in a spiral or other configuration, or may be provided in a folded configuration. For example, the electrodes may be wrapped around a relatively rectangular mandrel such that they form an oval wound coil for insertion into a relatively prismatic battery case.

A separator 40 is provided intermediate or between the positive electrode 32 and the negative electrode 36. According to an exemplary embodiment, the separator 40 is a polymeric material such as a polypropylene/polyethelene copolymer or another polyolefin multilayer laminate that includes micropores formed therein to allow electrolyte and lithium ions to flow from one side of the separator to the other. The thickness of the separator 40 is between approximately 10 micrometers (µm) and 50 µm according to an exemplary embodiment. According to a particular exemplary embodiment, the thickness of the separator is approximately 25 µm and the average pore size of the separator is between approximately 0.02 µm and 0.1 µm.

An electrolyte 50 is provided in the case 20 (e.g., through an opening or aperture 28 in the form of a fill port provided in the cover 22 of the lithium battery 10) to provide a medium through which lithium ions may travel. According to an exemplary embodiment, the electrolyte may be a liquid (e.g., a lithium salt dissolved in one or more non-aqueous solvents). According to another exemplary embodiment, the electrolyte may be a lithium salt dissolved in a polymeric material such as poly(ethylene oxide) or silicone. According to another exemplary embodiment, the electrolyte may be an ionic liquid such as N-methyl-N-alkylpyrrolidinium bis(trifluoromethanesulfonyl)imide salts. According to another exemplary embodiment, the electrolyte may be a solid state electrolyte such as a lithium-ion conducting glass such as lithium phosphorous oxynitride (LiPON).

Various other electrolytes may be used according to other exemplary embodiments. For example, according to an exemplary embodiment, the electrolyte may be a 1:1 mixture of ethylene carbonate to diethylene carbonate (EC:DEC) in a 1.0 M salt of LiPF₆. According to another exemplary embodiment, the electrolyte may include a polypropylene carbonate solvent and a lithium bis-oxalatoborate salt (sometimes referred to as LiBOB). According to other exemplary embodiments, the electrolyte may comprise one or more of a PVDF copolymer, a PVDF-polyimide material, and organosilicon polymer, a thermal polymerization gel, a radiation cured acrylate, a particulate with polymer gel, an inorganic gel polymer electrolyte, an inorganic gel-polymer electrolyte, a PVDF gel, polyethylene oxide (PEO), a glass ceramic electrolyte, phosphate glasses, lithium conducting glasses, lithium conducting ceramics, and an inorganic ionic liquid or gel, among others.

According to an exemplary embodiment, the positive electrode 32 is formed from a metal such as aluminum or an aluminum alloy having a layer of active material (e.g., LiCoO₂) provided thereon. Any of a variety of active materials may be utilized for the metal and active material according to various exemplary embodiments as may be now known or later developed.

According to an exemplary embodiment, the thickness of the positive electrode 32 is between approximately 5 µm and 25 µm. According to a particular exemplary embodiment, the thickness of the positive electrode 32 is approximately 20 µm. It should also be noted that the positive electrode 32 may be a thin foil material, or may be a grid such as a mesh grid, an expanded metal grid, a photochemically etched grid, or the like.

According to an exemplary embodiment, the negative electrode 36 is formed from a metal such as copper or a copper alloy having a layer of active material (e.g., a carbon material such as graphite) provided thereon. Any of a variety of active materials may be utilized for the metal and active material according to various exemplary embodiments as may be now known or later developed.

According to an exemplary embodiment, the thickness of the negative electrode 36 is between approximately 5 µm and 25 µm. According to a particular exemplary embodiment, the thickness of the negative electrode 36 is approximately 10 µm. It should also be noted that the negative electrode 36 may be a thin foil material, or may be a grid such as a mesh grid, an expanded metal grid, a photochemically etched grid, or the like.

As shown in FIGURES 1-2, a tab or current collector 34 is provided in electrical contact with the positive electrode 32 and a tab or current collector 38 is provided in electrical contact with the negative electrode 36 according to an exemplary embodiment. The current collector 34 of the positive electrode is electrically coupled to a pin or terminal 25 that is provided such that it protrudes through an opening or aperture 23 provided in the cover 22.

According to an exemplary embodiment, the current collector 34 is formed from aluminum or aluminum alloy and has a thickness of between approximately 0.05 mm and 0.15 mm, and the current collector 38 is formed from nickel or a nickel alloy and has a thickness of between approximately 0.05 mm and 0.15 mm.

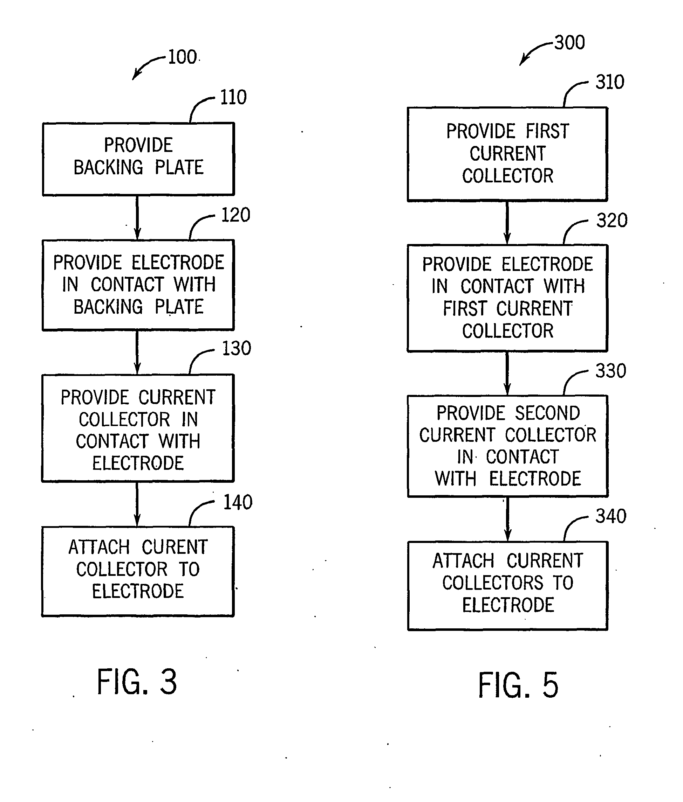

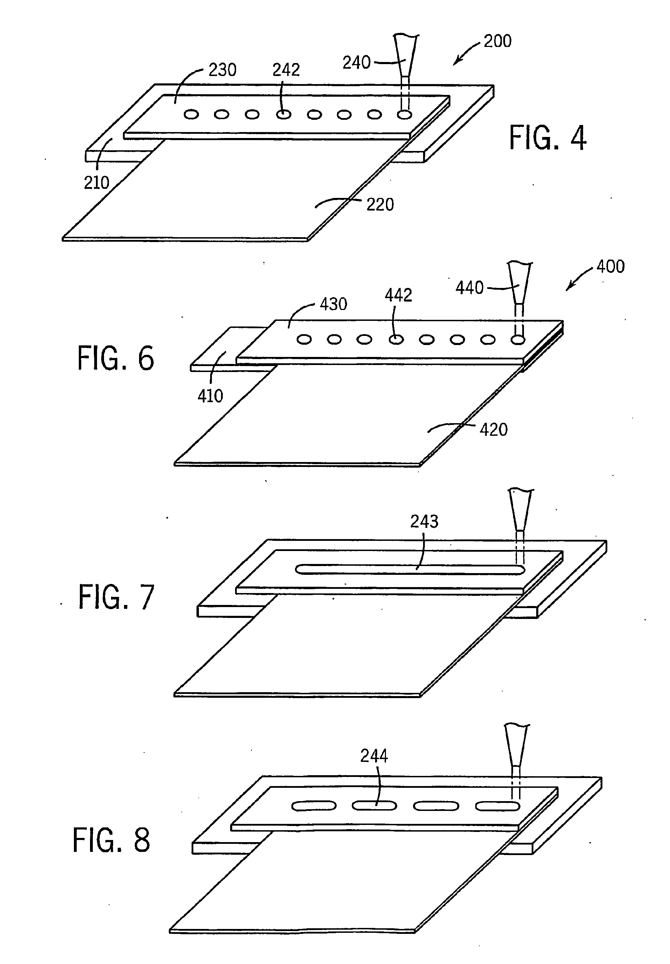

FIGURE 3 is a flow diagram describing steps in a method 100 of producing an electrode and current collector assembly according to an exemplary embodiment as may be used, for example, in a lithium battery such as that shown in FIGURES 1-2. FIGURE 4 is a schematic perspective view of an electrode and current collector assembly 200 showing the attachment of a current collector to an electrode according to the method shown in FIGURE 3.

In a step 110 of the method 100, a member or element 210 in the form of a backing plate is provided that comprises a refractory material such as one or more materials selected from the group consisting of TiN, TiCN, W, WC, AIN, SiC, SiN, and BN. The backing plate may be formed of one or more refractory materials and/or may have one or more refractory materials provided (e.g., coated) thereon.

In a step 120, at least a portion of an electrode 220 (e.g., a positive or a negative electrode) is provided in contact with the member 210, after which a current collector 230 is provided in contact with the electrode 220 in a step 130 such that the electrode 220 is sandwiched between the member 210 and the current collector 230.

In a step 140 of the method 100, the current collector 230 is coupled or attached to the electrode 220 in a laser welding process using a laser source 240. According to an exemplary embodiment, the laser source may be a conventional Nd:YAG laser (Neodymium YAG (Nd³⁺:Y₃Al₅O₁₂)) According to a particular exemplary embodiment, the laser source 240 may be a JK702H Nd:YAG Laser commercially available from GSI Lumonics ofNorthville, Michigan. To minimize spaces or gaps between the current collector 230 and electrode 220, these components are pressed together with a weld fixture prior to the laser welding operation.

As shown in FIGURE 4, the laser welding process acts to form a series of laser spot welds 242 to attach the current collector 230 to the electrode 220 according to an exemplary embodiment. According to other exemplary embodiments, other types of welds may be formed, such as a single spot weld, a continuous or elongated weld 243 (e.g., as shown in FIGURE 7) or a series of continuous welds 244 (e.g., as shown in FIGURE 8). Any of a variety of weld configurations may be used according to various exemplary embodiments. It should also be noted that the laser welding operation is performed after providing active material on the electrode.

According to an exemplary embodiment, laser welding is performed with the laser beam axis being vertical or slightly inclined with respect to the workpiece surface. Proper welding parameters are chosen so that the weld fully penetrates the current collector 230 and the electrode 220 such that visible melting can be seen at the bottom of the electrode. According to an exemplary embodiment, the laser welding process uses a laser pulse duration of between approximately 1.0 and 4.0 milliseconds and a laser energy of between approximately 1.0 and 4.5 Joules. According to a particular exemplary embodiment, the laser welding process uses a laser pulse duration of approximately 2.0 milliseconds and a laser energy of approximately 1.3 Joules for a nickel-copper weld. According to another particular exemplary embodiment, the laser welding process uses a laser pulse duration of approximately 3.0 milliseconds and a laser energy of approximately 4.1 Joules for an aluminum-aluminum weld.

The use of member 210 comprising a refractory material ensures a contained fusion between the electrode 220 and the current collector 230, which may act to avoid the creation of blown holes in the electrode 220. Due to its stability at high temperatures, the member 210 will not react with the melting metal during welding. In this manner, the welded pieces are prevented from sticking to the member 210.

According to a particular exemplary embodiment, two nickel current collectors were coupled to a copper foil electrode sandwiched between the nickel current collectors using a laser with fiber delivery. Spot welding was performed with a pulse energy of 4.2 Joules and a pulse duration of 6 milliseconds. A shielding gas of Argon at 50 CFH was used in the welding apparatus. Melting was visible on the backside of the bottom nickel current collector in the locations of the spot welds.

According to another particular exemplary embodiment, two aluminum current collectors were coupled to an aluminum foil electrode sandwiched between the current collectors. Spot welding was performed with a pulse energy of 6.8 Joules and a pulse duration of 6 milliseconds. A shielding gas of Argon at 50 CFH was used in the welding apparatus. Melting was visible on the backside of the bottom aluminum current collector in the locations of the spot welds.

FIGURE 5 is a flow diagram describing steps in a method 300 of producing an electrode and current collector assembly according to an exemplary embodiment as may be used, for example, in a lithium battery such as that shown in FIGURES 1-2. FIGURE 6 is a schematic perspective view of an electrode and current collector assembly 400 showing the attachment of a current collector to an electrode according to the method shown in FIGURE 5.

In a step 310 of the method 300, a first current collector 410 is provided according to an exemplary embodiment. In a step 320, at least a portion of an electrode 420 (e.g., a positive or a negative electrode) is provided in contact with the current collector 410, after which a second current collector 430 is provided in contact with the electrode 420 in a step 330 such that the electrode 420 is sandwiched between the first current collector 410 and the second current collector 430.

In a step 340 of the method 300, the current collectors 410 and 430 are coupled or attached to the electrode 420 in a laser welding process using a laser source 440. According to an exemplary embodiment, the laser source may be a conventional Nd:YAG laser (Neodymium YAG (Nd³⁺:Y₃Al₅O₁₂)). According to a particular exemplary embodiment, the laser source 440 may be a JK702H Nd:YAG laser commercially available from GSI Lumonics of Northville, Michigan. To minimize spaces or gaps between the first current collector 410, the electrode 420, and the second current collector 430, these components are pressed together with a weld fixture prior to the laser welding operation.

As shown in FIGURE 6, the laser welding process acts to form a series of spot welds 442 to attach the current collectors 410 and 430 to the electrode 420 according to an exemplary embodiment. According to other exemplary embodiments, other types of welds may be formed, such as a single spot weld, a continuous or elongated weld (e.g., as shown in FIGURE 7) or a series of continuous welds (e.g., as shown in FIGURE 8). Any of a variety of weld configurations may be used according to various exemplary embodiments.

According to an exemplary embodiment, laser welding is performed with the laser beam axis being vertical or slightly inclined with respect to the workpiece surface. Proper welding parameters are chosen so that the weld fully penetrates the current collectors 410 and 430 and the electrode 420 such that visible melting can be seen at the bottom of the stack (e.g., on a surface of the first current collector 410). According to an exemplary embodiment, the laser welding process uses a laser pulse duration of between approximately 5.0 and 7.0 milliseconds and a laser energy of between approximately 4.0 and 7.0 Joules. According to a particular exemplary embodiment, the laser welding process uses a laser pulse duration of approximately 6.0 milliseconds and a laser energy of approximately 4.2 Joules for a nickel-copper-nickel weld. According to another particular exemplary embodiment, the laser welding process uses a laser pulse duration of approximately 6.0 milliseconds and a laser energy of approximately 6.8 Joules for an aluminum-aluminum-aluminum weld.

According to the exemplary embodiment described with respect to FIGURES 5 and 6, no refractory backing plate (e.g., such as member 210 shown in FIGURE 4) is utilized. In contrast, the electrode 420 is provided between or intermediate two current collectors (e.g., current collectors 410 and 430). The use of two current collectors eliminates the need to use a backing plate because the energy of the welding is absorbed by the thicker assembly that includes two current collectors.

According to a particular exemplary embodiment, a nickel current collector was coupled to a copper foil electrode provided on a refractory backing plate using a laser with fiber delivery. Spot welding was performed with a pulse energy of 1.3 Joules and a pulse duration of 2.0 milliseconds. A shielding gas of Argon at 50 CFH was used in the welding apparatus. Melting of the copper foil was visible on the backside of the copper foil in the locations of the spot welds.

According to another particular exemplary embodiment, an aluminum current collector was coupled to an aluminum foil electrode provided on a refractory backing plate. Spot welding was performed with a pulse energy of 4.1 Joules and a pulse duration of 3.0 milliseconds. A shielding gas of Argon at 50 CFH was used in the welding apparatus. Melting of the aluminum foil was visible on the backside of the aluminum foil in the locations of the spot welds.

Conventionally, current collectors are attached to lithium battery electrodes using ultrasonic or mechanical attachment methods. Because electrodes and current collectors are made from relatively thin materials, the use of laser welding or laser riveting operations present an engineering challenge, since such operations if not carefully controlled may lead to the formation of holes in the thin film materials (e.g., the laser "drills" through the materials). The method described herein (e.g., the use of a backing plate and/or the use of two current collectors on opposite sides of the electrode) advantageously allow the use of laser welding or laser riveting operations with thin film materials used in the production of lithium batteries.

It should be appreciated by those reviewing this disclosure that various advantages may be obtained as a result of using a laser welding or laser riveting process to couple or attach two current collectors to an electrode. For example, the user of such a process may provide improved reliability of the welding operation and may produce welds that are relatively easy to inspect to confirm proper joining of the components as compared to other welding methods. Such process may also provide increased versatility, since laser welding operations can be used to join combinations of materials that are fusion weldable that otherwise may not be ultrasonically weldable or that would require a relatively expensive modification to ultrasonic welding equipment. Laser welding processes may also provide improved flexibility as compared to ultrasonic welding, since it is relatively easy to tailor or configure the weld joint design based on structural and electrical requirements, and since a single laser station may be used in welding a variety of different components having a variety of different configurations.

According to an exemplary embodiment, lithium batteries such as those described herein may be used in conjunction with medical devices such as medical devices that may be implanted in the human body (referred to as "implantable medical devices" or "IMDs"). For example, such batteries may be used in conjunction with defibrillators, neurological stimulation devices, pacemakers, cardioverters, cardiac contractility modulators; drug administering devices, diagnostic recorders, cochlear implants, and the like for alleviating the adverse effects of various health ailments. According to still other embodiments, non-implantable medical devices or other types of devices may utilize batteries as are shown and described in this disclosure.

It is important to note that the methods and batteries as shown and described with respect to the various exemplary embodiments are illustrative only. Although only a few embodiments have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, orientations, etc.) without materially departing from the novel teachings and advantages of the subject matter recited in the claims. Accordingly, all such modifications are intended to be included within the scope of the present invention as defined in the appended claims. The order or sequence of any process or method steps may be varied or re-sequenced according to other exemplary embodiments. Other substitutions, modifications, changes and omissions may be made in the design, operating conditions and arrangement of the exemplary embodiments without departing from the scope of the present inventions as expressed in the appended claims.

## Claims

1. A method of producing a lithium battery (10) comprising:
providing a current collector in contact with at least a portion of a first side of an electrode configured for use within a lithium battery;
providing a plate in contact with at least a portion of a second side of the electrode opposite the first side, the plate comprising a refractory material; and
laser welding the current collector (230) to the electrode (220).

2. The method of claim 1, wherein the current collector (230) and the electrode (220) comprise aluminum.

3. The method of claim 1, wherein the current collector (230) comprises nickel and the electrode (220) comprises copper.

4. The method according to claim 1, further wherein the step of providing said refractory material adjacent the electrode (220) on a first side of the electrode (220) is before the laser welding step.

5. The method of claim 4, wherein the refractory material comprises at least one material selected from the group consisting of TiN, TiCN, W, WC, AIN, SiC, SiN, and BN.

6. The method of claim 4, wherein the refractory material is coated on said plate (210).

7. The method according to any of the preceding claims, wherein the laser welding step comprises providing at least one laser spot weld (242).

8. The method according to any of claims 1 through 6, wherein the laser welding step comprises providing at least one continuous laser weld (243).

9. The method according to any of claims 1 through 6, further comprising providing a cell element comprising the electrode (220) in a battery container (20).

10. The method according to any of claims 1 through 6, wherein the lithium battery (10) is a lithium-ion battery.
